# EUROPEAN PATENT SPECIFICATION

(11) **EP 2 891 617 B1**
(45) Date of publication and mention of the grant of the patent: **04.07.2018**
(21) Application number: 13787100.0
(22) Date of filing: 09.05.2013
(51) Int. Cl.: B65G 69/00, B65G 69/28

(54) **INSULATING LOADING BAY**
ISOLIERENDE VERLADERAMPE
QUAI DE CHARGEMENT ISOLANT

(30) Priority: 11.05.2012 ES 201230717
(43) Date of publication of application: 08.07.2015
(73) Proprietor: Amiserru, S.L., 08190 Sant Cugat del Vallés, Barcelona (ES)
(72) Inventor: IGLESIAS BALLESTER, Miguel Angel, 08190 Sant Cugat Del Valles Barcelona (ES)
(74) Representative: Maldonado Jordan, Julia
(86) International application number: PCT/ES2013/070295
(87) International publication number: WO 2013/167785

(56) References cited:
- EP-A1- 2 357 147
- WO-A1-2011/122940
- WO-A2-2009/011568
- US-A- 3 375 625
- US-A- 4 494 341
- US-A- 4 554 768
- US-A1- 2002 112 418
- US-B1- 7 146 673

## Description

### Object of the invention

The invention refers to an insulating loading bay, of the type aimed to be secured in a protruding position in respect to the front of a building and aligned with a loading bay for trucks or similar vehicles, located in an opening for the access to the building having an insulating shelter and an extension shaped as an inverted "U" for the closing of the sides and top portion of a passage area between the loading box of a truck and the opening to access to the building, as well as a moveable footbridge which communicates the floor of the building or premises with the loading box of the truck.

This shelter has construction characteristics aimed at permitting a vertical swiveling movement of the shelter in respect to the loading box of the truck, during the operations of loading and unloading of the same, and to establish a total lower part closing to minimize the energy losses, as well as to prevent the eventual entry of insects, rodents, etc. thanks to a flexible lateral closing established between the footbridge and the interior sides of the insulating shelter and said extension.

### Field of the invention

This invention is to be applied to loading bays of buildings, mainly air conditioned buildings, with the aim to minimize the energy losses during the processes of loading and unloading of the trucks.

### Background of the invention

Currently, the air conditioned premises have insulating shelters permitting to minimize in a higher or lower degree the energy losses in the processes of loading/unloading the trucks.

These insulating shelters are located in the front part of the opening for the door of the loading bay and, for being fixed, the vertical oscillations of the truck during the process of loading and unloading, provoke an early wear of the same.

Generally these shelters are prepared to receive a controlled pressure on occasion of the trucks going back towards the loading opening.

One of the most important shortcomings in this type of installations is that of not having solved the lower closing of the shelter through which an important part of the air conditioning of the installation is lost, being as well a point of entry for insects, rodents, etc. This area is presently occupied by a hydraulic ramp or footbridge, permitting to communicate the premises with the truck. Document US7146673 faces said problem providing the footbridge with a sealing flexible anti-friction edges.

Document US3375625A describes an insulating loading bay according to the preamble of claim 1, furthermore a loading bay formed by two lateral shelters which are vertically movable and which are connected to a spring in order to be supported in a middle position, allowing its further upward and downward movement. This document also describes the existence of an upper shelter connected to a counterweight mechanism which urges said upper shelter to the uppermost position, and allowing a user to move said upper shelter downward in order to adapt its position to a truck size. This loading way has the problem that if a user does not adapt the upper shelter position and a parked truck is moved upwards the upper shelter cannot absorb said upward movement and undesired stresses will be produced. Furthermore according to the solution described on document US3375625A if the protruding size of the shelter is small the truck shall be parked very close to the loading bay increasing the risk of a crash or crush, and if the protruding size of the shelter is big then the movable part of the shelter will be very big, increasing its weight and spacing away its center of mass from the vertical guides, generating undesired problems.

### Description of the invention

The invention refers to an insulating loading bay according to the appended claim 1.

The loading bay has a mechanism for supporting-leveling and vertical guiding of the shelter in respect to an extension protruding from the access opening to access the building, said mechanism making possible the vertical displacement of the shelter in respect of said fixed extension and to absorb the vertical movements transmitted by the truck to the shelter.

This extension may have variable lengths, according to the sizes of the hydraulic platform or footbridge of the loading bay and the available transport means (hand trolleys, electric trolleys, hydraulic trolleys...) for loading/unloading the truck.

The mechanism for supporting-leveling and vertical guiding of the shelter has in the front some vertical guides on which the shelter is assembled with the possibility of vertical displacement, as well as some cables, tapes, belts, etc. for the supporting-leveling of the shelter, which run around pulleys mounted on a shaft mainly located in the upper part of the mechanism of the insulating shelter; being said cables, tapes, belts, etc. secured by its opposite ends to the shelter and to counterweighs vertically displaceable in respect to vertical guides; so that the movement of the shelter is transmitted through the cables, tapes, and belts, etc. to said counterweights.

Said mechanism for supporting-leveling and for the vertical guiding of the shelter, has springs and abutments located in the opposite sides of a fixed support connected to the fixed extension supporting of said mechanism for supporting-leveling and vertical guiding of the shelter. Said abutments permitting to regulate the pressure of said springs and the insulating shelter to recover its original position when the truck leaves the loading bay.

The vertical guides have in the frontal part some bearings or antifriction elements for supporting the shelter, so that said bearings facilitate the oscillating movement of the truck so that the shelter becomes integral to the truck preventing friction among those elements.

According to the invention, the shelter is internally formed by flexible foam, preferably polyurethane foam, or a plastic material, lined by a plastic canvas or similar in the front and in the sides and mounted on a support plate located in front of the supporting-leveling and vertical guiding mechanism.

The cables, tapes, belts, etc. for the supporting-leveling of the shelter are secured to the plate supporting said shelter by one of the ends and to a counterweight by the opposite end.

The plate to support the shelter has vertical channels to receive the bearings or antifriction elements of the supporting-leveling and vertical guiding mechanism for the shelter, as well as some protruding elements preventing the horizontal loosening of the flexible shelter in respect to the support plate.

Said protrusions, preventing the loosening in the horizontal direction of the flexible shelter for the support plate, are formed by short lengths permitting to remove the shelter without the need to displace the same vertically in its entirety.

According to the invention, the insulating loading bay has a footbridge that occupies the total space comprised between the internal faces of the shelter, having in these lateral ends antifriction flexible edges closing the space between the footbridge and the insulating shelter, obtaining an additional closing of the passage area, reducing the energy losses, as well as preventing the entry of insects, rodents, dust, etc.

Said footbridge has dimensions which are adequate to the loading and unloading means foreseen to be used, as well as adequate to the difference in height between the level of the floor of the building and the trucks which are foreseen to be used in the loading bay.

Said footbridge has flexible protecting frontal elements with antifriction properties which establish a closing between said footbridge and the loading box of the truck, when said footbridge is arranged in an operative position, supported on the loading box of the truck.

Said footbridge may be formed by only one unit, or alternatively by a central body and lateral extensions completing the entirety of the space existing between the internal sides of the insulating shelter. In both cases, said footbridge has lateral flexible, antifriction protecting elements, establishing the closing between said footbridge and the internal sides of the shelter, when said footbridge is arranged in an operating position, supported on the box of a truck.

In case that said footbridge has the mentioned lateral extensions, these may be fixed or moveable, hand activated or automatic, unitary or made out of parts, and having in its lateral ends contacting the insulating shelter and the extensions as well as in its frontal parts, the flexible and antifriction protecting elements as above stated.

The footbridge has in this frontal region a space which is substantially smaller than the full width of the opening formed between the internal walls of the insulating shelter, which may be fixed or movable, unique or formed by composing portions, whose function is to rest on the loading box of the truck to facilitate to carry out the loading/unloading operations between the truck and the building. In its back region, it is fixed to the internal floor of the building, so that no slits or orifices exist communicating the floor of the building to the exterior.

It has been foreseen that the footbridge may have in its lower face, or opposite side to the passage area, a covering of insulating material increasing the insulation of the passing area between the truck and the building.

Said footbridge comprises flexible and insulating protecting elements located under its hinged area establishing the external closing and sealing of said hinged area, occupying all of the area existing between the internal faces of the shelter and the fixed extension.

### Description of the drawings

To complement the present description and with the aim to facilitate the understanding of the features of the invention, the present description has annexed a set of drawings in which, with illustrative and non-limitative purposes, the following is represented:
Figure 1 shows a diagrammatic side view of an example of an embodiment of the insulating loading bay according to the invention, in which the extensions have been diagrammatically represented, as well as the insulating shelter, the support leveling and vertical guiding mechanism for the shelter, in respect of said extension and the footbridge for the loading/unloading of the truck.
Figure 2 shows a partial perspective view of the shelter of the invention representing the shelter frontally separated from the supporting-leveling and guiding mechanism to permit the observation of the vertical guides and the elements constituting the support means for the shelter.
Figure 3 shows a similar view to that of Figure 1 , in which the mechanism for supporting-leveling and vertical guiding of the shelter has been represented in cross section.
Figure 4 shows an enlarged view of a portion of Figure 3 , in which the mechanism for supporting-leveling and guiding of the shelter has adjustable means for the regulation of the counterweight associated to the shelter by the support cables, tapes, belts, etc.
Figure 5 shows an upper plan view of an example of embodiment of the shelter and the extension in which the for supporting-leveling and vertical guiding mechanism of the shelter, and the shelter itself, have been shown in cross section through an horizontal plane.

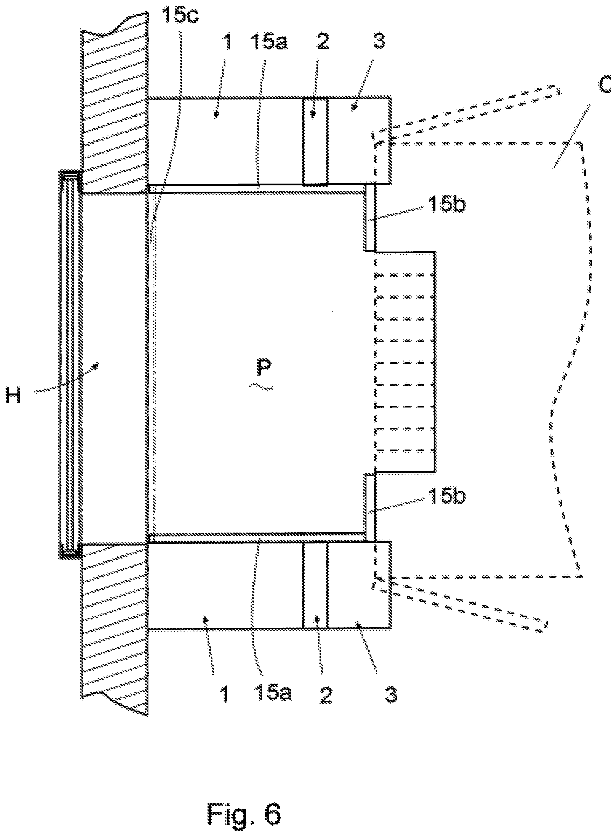

Figure 6 shows an upper plan view of the insulating loading bay according to the invention, without the upper cover and having a footbridge in extended position, occupying all the width between the internal opposite sides of the insulating shelter and the support extension resting on the loading box of the truck; the said footbridge; and the insulating shelter which contacts the loading box of the truck. In the sides of the footbridge as well as in the front part of the same non occupied by the lips or flanges resting on the truck, some flexible edges may be observed which are adapted to the internal side of the shelter minimizing the energy loses by air leakages.
Figure 7 corresponds to a front view of the insulating loading bay with the footbridge in position of vertical resting, showing flexible areas closing the internal side of the insulating shelter.

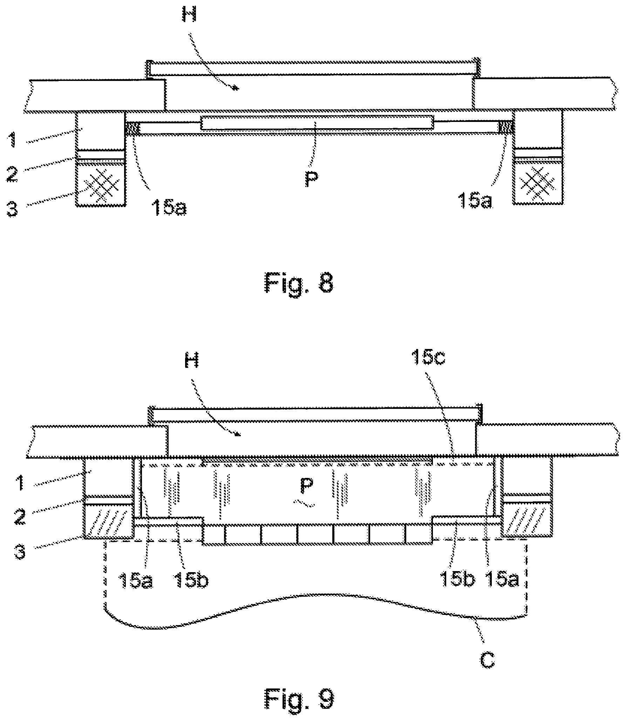

Figure 8 corresponds to a plan view from the upper side without the cover of the shelter according to Figure 7.
Figure 9 corresponds to a plan view of the elements shown in Figure 8 with the footbridge extended in the position for loading/unloading and resting on the loading box of a truck.
Figure 10 corresponds to a front view of a variant embodiment of Figure 7 in which the footbridge has an addition in each of in its sides extending to the entirety of the space comprised between the internal faces of the insulating shelter.
Figure 11 corresponds to a plan view from the upper side without the cover of the shelter as shown in the Figure 10.
Figure 12 corresponds to a plan view of the elements shown in Figure 11 with the footbridge in position of loading/unloading and resting on the platform of a truck.

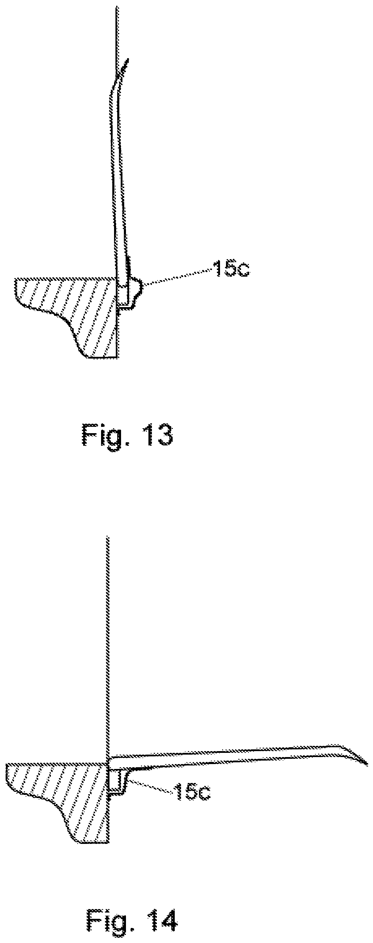

Figure 13 corresponds to a cross section showing only the footbridge in vertical resting position to enhance the details of an insulating closure of the hinged area of said footbridge portion to prevent the energy loss through said hinged area.
Figure 14 corresponds to a cross section view of the elements of Figure 13 with the extension portions in horizontal position for loading/unloading.

### Preferred embodiment of the invention

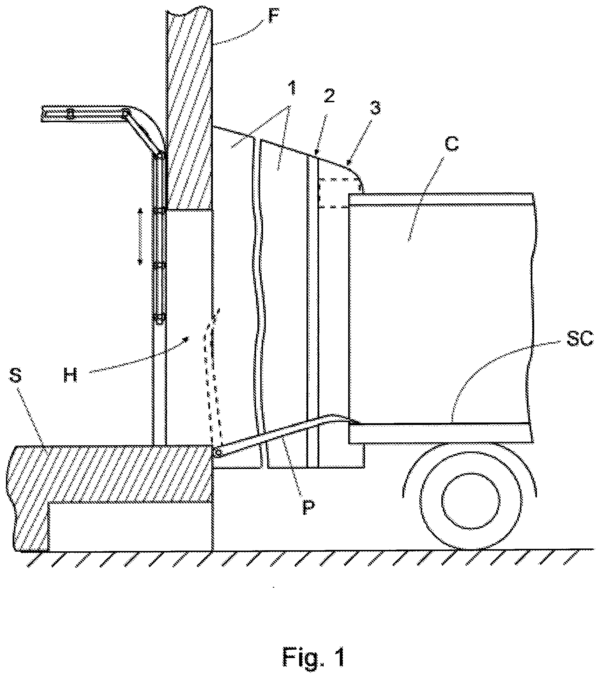

In the example which has been shown in Figure 1 the insulating loading bay according to the invention has been shown secured to a facade (F) of a building and aligned up with an internal separating door located in the opening (H) to have access to the building. In said Figure 1 , the insulating loading bay comprises: a fixed extension (1) protruding from the loading bay of the building; a mechanism (2) for supporting-leveling and guiding vertically the insulating shelter (3) in respect of the fixed extension (1); an insulating shelter (3) and an footbridge (P) shown in dashed lines in a non-active or vertical position and with continuous line in a practically horizontal active position connecting the loading bay with the loading box of the truck.

Said extension (1) will have variable dimensions according to the depth of the footbridge (P) which that will be defined in its turn by the transport means used for the loading/unloading as well as the difference in height between internal floor of the building (S) and the upper part of the bottom (S) of the loading box of the truck (SC).

This mechanism (2) permits the insulating shelter (3) to describe vertical movements together with the loading box (C) of a truck during the loading and unloading of this latter due to passage on the loading box (P) of the loading bay of lift trucks for the transport of loads.

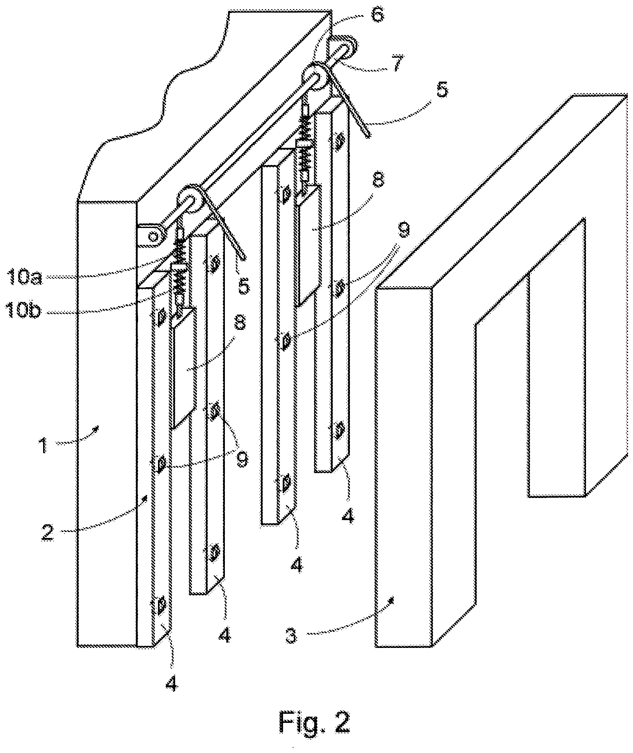

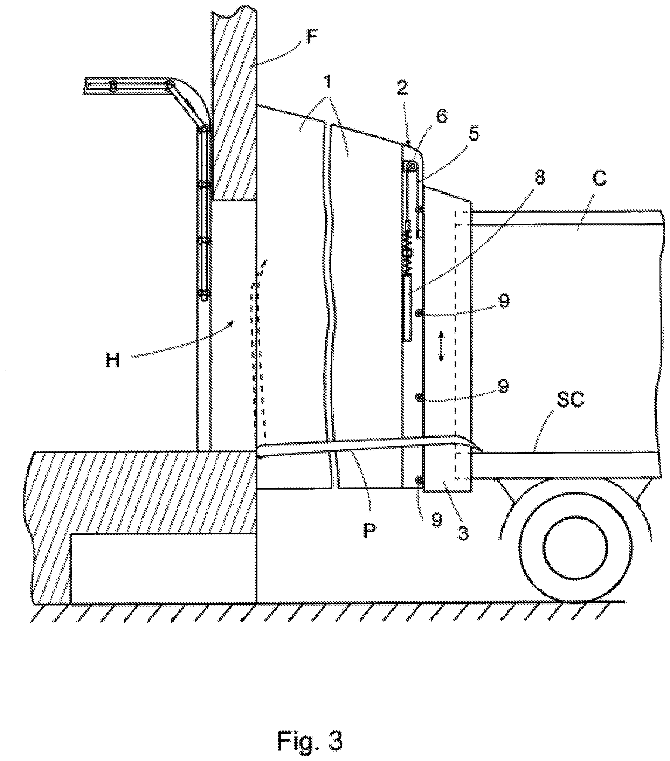

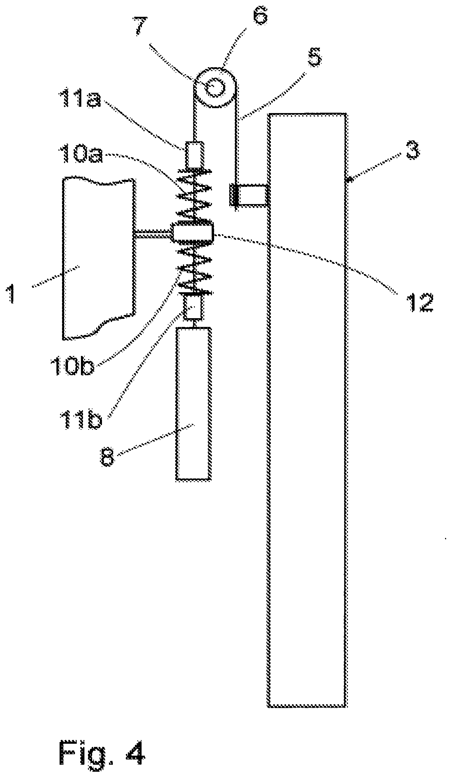

In the embodiment shown as an example in Figure 2 the mechanism (2) for the supporting-leveling and vertical guiding of the insulating shelter has vertical guides (4) for the assembly of the shelter (3) with possibility of vertical displacement, and some cables, tapes, belts, etc. (5) to support the insulating shelter, which run around pulleys (6) mounted on a shaft (7); being secured said cables, tapes, belts, etc. (5) by the opposed ends to counterweights (8) and to the shelter (3) as may be observed in Figures 3 and 4 , as in said Figure 2 the shelter has been shown separated from the mechanism (2) for the support and vertical guiding of the same.

As is to be observed in mentioned Figure 2 , the vertical guides (4) have frontally some bearings of similar elements (9) to facilitate the support and the vertical displacement of the insulating shelter (3).

In the example embodiment shown in Figures 3 and 4 the mechanism (2) for the support and vertically guiding the insulating shelter (3), has a positioning device for the insulating shelter (3), being said positioning device formed by a cable, tape, belt, etc. (5) secured to the insulating shelter (3) by one of its ends, some springs (10a, 10b) and abutments (11a, 11b) which are capable to regulate the pressure of said springs, both being situated (springs and abutments) in the opposite sides of a fixed support (12) secured to the fixed extension (1) supporting said mechanism (2) for the support and vertical guiding of the shelter (3), as well as a counterweight (8) located in the opposite end of the cable, tape, belt, etc. (5).

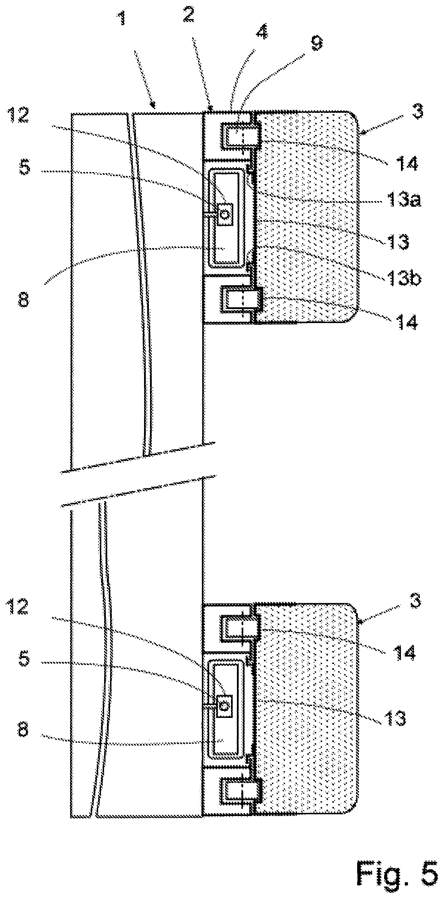

In the example of embodiment shown in Figure 5 the insulating shelter (3) is formed by flexible foam with a plastic perimetrical covering and assembled on a support plate (13) in which said cables, tapes, belts, etc. (5) for the supporting-leveling of the shelter are secured.

Said plate (13) has vertical channels (14) to be guided on the bearings of similar elements (9) of the supporting-leveling and vertical guiding mechanism for the insulating shelter (3). Also, said plate (13) has associated a guiding system to prevent the separation of the insulating shelter (3) by means of metal plates or similar (13a, 13b) preventing the loosening of the insulating shelter (3) from its guides.

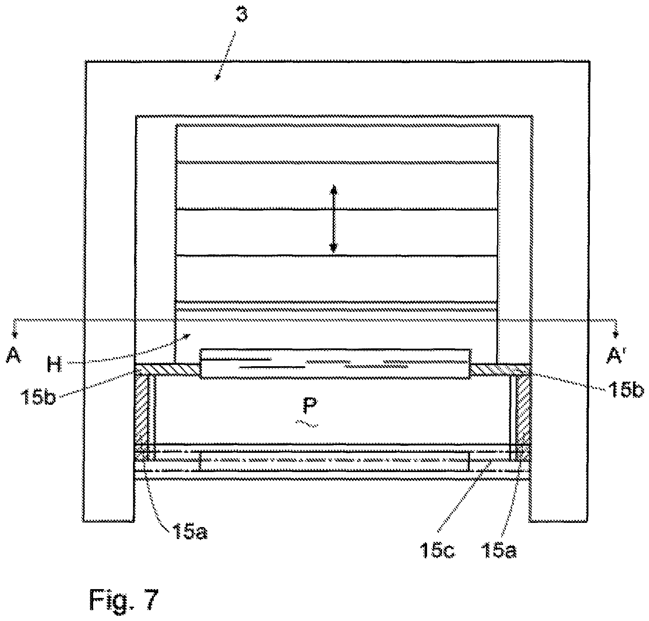

In the example of embodiment shown in Figures 6 and 7 , the insulating loading bay has in its sides insulating and tight closing protecting elements (15a) opposite to each other and insulating and tight closing protecting elements (15b) located in the front part of the extension portion, as well as an insulating flexible and tight closing protecting element (15c), located in the lower part of the extension portion, occupying all of the space between the internal faces of the shelter, and covering all the hinged area of the footbridge; and aimed all of them to form a lower closing arrangement between the loading box (P) and the side walls of the insulating shelter and the loading box (C) of the truck, when said loading box is arranged in an operative position that is, supported on the face of the loading box (SC) of a truck as shown in Figure 3.

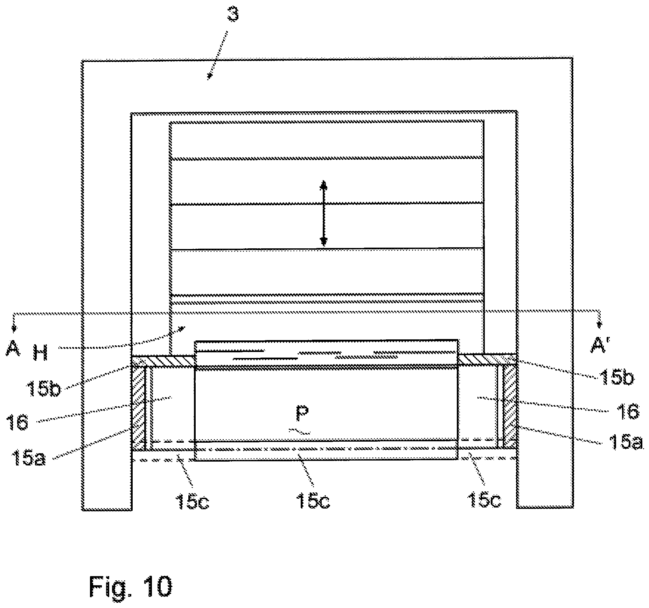

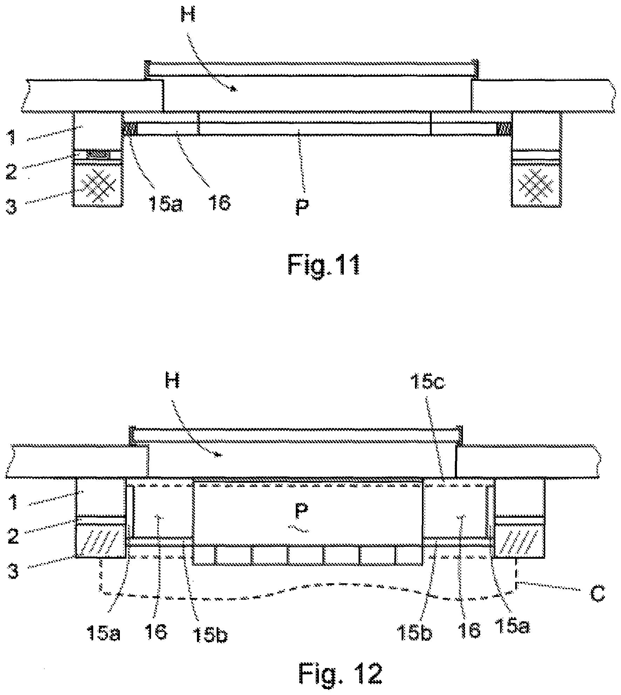

In an alternative example of embodiment shown in Figures 10, 11 and 12, it is to be appreciated that the footbridge (P) has associated in its ends extensions (16) to cover all of the width comprised between the side walls of the insulating shelter (3). In this case, the protecting elements (15a and 15b) would be located on said extensions (16) as shown in the Figures.

Said extensions portions (16) may be integral or not with the loading box (P), or movable or fixed, in one unit or formed by component parts.

After having sufficiently defined the invention, as well as a preferred example of embodiment, it is to be remarked to all effects that the materials, shape, size and arrangement of the described elements could be modified whenever said changes do not mean an alteration of the essential characteristics of the invention as defined in the following claims.

## Claims

1. Insulating loading bay, of the type aimed at loading and unloading trucks, having
• an insulating shelter (3) for the lateral and superior closing of a passage area between the loading box of a truck and an opening (H) to have access to a building,
• a fixed footbridge (P) protruding from the opening (H) to have access to the building to form said passage area;
• a supporting-leveling and vertical guiding mechanism (2) for supporting-leveling and vertical guiding the shelter (3) in respect of said footbridge (P), said mechanism (2) including
∘ vertical guides (4) on which the shelter (3) is assembled allowing the shelter vertical displacement,
∘ pulleys (6) assembled on a shaft (7) located in the upper part of the mechanism (2), and cables, tapes or belts (5) running on said pulleys (6) and secured by its opposed ends to the shelter (3) and to counterweights (8) vertically displaceable in respect to the vertical guides (4), said cables, tapes or belts (5) transmitting the vertical movement of the shelter (3) to the counterweights (8);
• said shelter (3) is configured in the form of an inverted "U";
**characterized in that** the insulating loading bay comprises:
• a fixed extension (1) protruding from the loading bay of the building integrating a fixed support (12), said fixed support (12) supporting the mechanism (2) for supporting-leveling and vertical guiding the shelter and the shelter (3); wherein
• the mechanism (2) further has some springs (10a, 10b) and abutments (11a, 11b) with capacity to regulate the pressure of said springs (10a, 10b) located in opposed sides of said fixed support (12);
permitting the vertical displacement of the shelter (3) in respect of said fixed footbridge (P), and the absorption of the vertical displacements transmitted by the truck to the shelter (3), and permitting the shelter (3) to recover its original position when the truck leaves the loading bay.

2. Insulating loading bay, according to claim 1, wherein the vertical guides (4) of the supporting-leveling and the vertical guiding mechanism (2) have in the front part some bearings or antifriction elements (9) for the support of the shelter (3).

3. Insulating loading bay, according to claim 1, wherein the shelter (3) is formed by a flexible foam or plastic material assembled on a support plate (13) opposite to the supporting-leveling and vertical guiding mechanism (2).

4. Insulating loading bay, according to claim 3, wherein the cables, tapes or belts (5) of the supporting-leveling and vertical guiding mechanism (2) are secured to the support plate (13) of said shelter (3) by one of its ends and to the counterweight (8) by the opposite end.

5. Insulating loading bay, according to the previous claims 3 or 4; wherein the vertical guides (4) of the supporting-leveling and the vertical guiding mechanism (2) have in the front part some bearings or antifriction elements (9) for the support of the shelter (3), and wherein the support plate (13) has vertical channels (14) to receive the bearings or antifriction elements (9) of the support and vertical guiding mechanism (2), as well as some protrusions to prevent the loosening in the horizontal direction of the shelter (3) from the support plate (13).

6. Insulating loading bay, according to claim 5, wherein the protrusions to prevent the loosening in the horizontal direction of the shelter (3) from the support plate (13) are formed by short stretches permitting the removal of the shelter (3) without the need to displace the same vertically in its entirety.

7. Insulating loading bay according to any preceding claim wherein the footbridge (P) occupies the totality of the space between the sides of the shelter (3), having in its side ends flexible antifriction edges constituting the closure between the footbridge (P) and the shelter (3) providing and additional tight closing of the passage area reducing energy losses and preventing the entry of insects, rodents or dust.

8. Insulating loading bay, according to claim 7, wherein the footbridge (P) has frontal flexible antifriction protecting elements (15a) establishing the closure between the footbridge (P) and the loading box of the truck, when said footbridge (P) is arranged in an operative position supported on the loading box of the truck.

9. Insulating loading bay, according to any of the claims 7 and 8, wherein the footbridge (P) is formed by a central body and lateral extensions covering all of the space existing between the internal faces of the shelter (3).

10. Insulating loading bay, according to any of the claims 7, 8 and 9, wherein the footbridge (P) has in is lower face, opposite to the passage area, a lining of insulating material.

11. Insulating loading bay, according to claim 7, wherein the footbridge (P) has lateral flexible antifriction protecting elements (15b) establishing the closure between by the footbridge (P) and the internal faces of the shelter (3), and the extension portion, when said footbridge (P) is arranged in an operative position supported on the loading box of the truck.

12. Insulating loading bay, according to claim 7, wherein the footbridge (P) has flexible insulating elements located under its hinged area establishing the external closing and sealing of said hinged area extending to the whole area existing between the internal surfaces of the shelter (3) and the fixed extension (1).

## Patentansprüche

1. Isolierende Verladerampe der Art, zum Beladen und Entladen von Lastkraftwagen, die Folgendes aufweist.
• ein isolierendes Schutzdach (3) für den seitlichen und oberen Verschluss eines Durchgangsbereichs zwischen dem Container eines Lastkraftwagens und einer Öffnung (H), um Zugang zu einem Gebäude zu haben,
• einen befestigten Steg (P), der von der Öffnung (H) hervorsteht, um Zugang zu dem Gebäude zu haben, um den Durchgangsbereich zu bilden;
• einen stützenden, nivellierenden und vertikalen Führungsmechanismus (2) zum Stützen, Nivellieren und vertikalen Führen des Schutzdaches (3) bezüglich des Stegs (P), wobei der Mechanismus (2)
∘ vertikale Führungen (4), auf denen das Schutzdach (3) angeordnet ist, wodurch das Schutzdach vertikal verschoben werden kann,
∘ Seilrollen (6), die auf einer Welle (7) angeordnet sind, die sich in dem oberen Teil des Mechanismus (2) befindet, und Kabel, Bänder oder Riemen (5), die auf den Seilrollen (6) laufen und durch ihre gegenüberliegenden Enden an dem Schutzdach (3) und an Gegengewichten (8) befestigt sind, die bezüglich der vertikalen Führungen (4) verschiebbar sind, einschließt, wobei die Kabel, Bänder und Riemen (5) die vertikale Bewegung des Schutzdaches (3) an die Gegengewichte (8) übertragen;
• das Schutzdach (3), das in Form eines umgekehrten "U"s gestaltet ist;
**dadurch gekennzeichnet, dass** die isolierende Verladerampe Folgendes umfasst:
• eine befestigte Erweiterung (1), die von der Verladerampe des Gebäudes hervorsteht und eine befestigte Stütze (12) integriert, wobei die befestigte Stütze (12) den Mechanismus (2) zum Stützen, Nivellieren und vertikalen Führen des Schutzdaches und des Schutzdaches (3) stützt; wobei
• der Mechanismus (2) ferner einige Federn (10a, 10b) und Anschläge (11a, 11b) und die Fähigkeit hat, den Druck der Federn (10a, 10b) zu regulieren, die sich auf gegenüberliegenden Seiten der befestigten Stütze (12) befinden;
wobei er die vertikale Verschiebung des Schutzdaches (3) bezüglich des befestigten Steges (P) und die Aufnahme der vertikalen Verschiebungen, die durch den Lastkraftwagen an das Schutzdach (3) übertragen wird, erlaubt, und dem Schutzdach (3) erlaubt, seine originale Position wiederherzustellen, wenn der Lastkraftwagen die Verladerampe verlässt.

2. Isolierende Verladerampe nach Anspruch 1, wobei die vertikalen Leitungen (4) des stützenden, nivellierenden und vertikalen Führungsmechanismus (2) im vorderen Teil einige Lager oder Antireibungselemente (9) für das Stützen des Schutzdaches (3) hat.

3. Isolierende Verladerampe nach Anspruch 1, wobei das Schutzdach (3) durch einen flexiblen Schaum oder ein Plastikmaterial gebildet ist, das auf der Trägerplatte (13) gegenüber dem stützenden, nivellierenden und vertikalen Führungsmechanismus (2) angeordnet ist.

4. Isolierende Verladerampe nach Anspruch 3, wobei die Kabel, Bänder oder Riemen (5) des stützenden, nivellierenden und vertikalen Führungsmechanismus (2) an der Trägerplatte (13) des Schutzdaches (3) durch eins ihrer Enden und an dem Gegengewicht (8) durch das gegenüberliegende Ende befestigt sind.

5. Isolierende Verladerampe nach den vorhergehenden Ansprüchen 3 oder 4, wobei die vertikalen Führungen (4) des stützenden, nivellierenden und vertikalen Führungsmechanismus (2) im vorderen Teil einige Lager oder Antireibungselemente (9) für das Stützen des Schutzdachs (3) haben, und wobei die Trägerplatte (13) vertikale Kanäle (14), um die Lager oder Antireibungselemente (9) des stützenden und vertikalen Führungsmechanismus (2) zu empfangen, sowie einige Vorsprünge hat, um das Lösen des Schutzdaches (3) von der Trägerplatte (13) in horizontaler Richtung zu verhindern.

6. Isolierende Verladerampe nach Anspruch 5, wobei die Vorsprünge, die das Lösen des Schutzdaches (3) von der Trägerplatte (13) in horizontaler Richtung verhindern, über kurze Abschnitte gebildet sind, wodurch das Entfernen des Schutzdaches (3) ohne notwendiges vertikales Verschieben dieses als Ganzes erlaubt wird.

7. Isolierende Verladerampe nach einem der vorgehenden Ansprüche, wobei der Steg (P) den gesamten Raum zwischen den Seiten des Schutzdaches (3) einnimmt, wobei er an seinen Seiten flexible Antireibungskanten hat, die den Verschluss zwischen dem Steg (P) und dem Schutzdach (3) herstellen, wobei ein zusätzlicher dichter Verschluss des Durchgangsbereichs bereitgestellt wird, wodurch Energieverlust reduziert wird und das Eindringen von Insekten, Nagern oder Staub vermieden wird.

8. Isolierende Verladerampe nach Anspruch 7, wobei der Steg (P) vordere flexible Antireibungsschutzelemente (15a) hat, die den Verschluss zwischen dem Steg (P) und dem Container des Lastkraftwagens herstellt, wenn der Steg (P) in einer Betriebsposition angeordnet ist und auf dem Container des Lastkraftwagens gestützt wird.

9. Isolierende Verladerampe nach einem der Ansprüche 7 und 8, wobei der Steg (P) durch einen zentralen Körper und seitliche Erweiterungen gebildet ist und den gesamten Raum zwischen den Innenseiten des Schutzdaches (3) abdeckt.

10. Isolierende Verladerampe nach einem der Ansprüche 7, 8 und 9, wobei der Steg (P) an seiner Unterseite, gegenüber des Durchgangsbereichs, eine Auskleidung aus isolierendem Material hat.

11. Isolierte Verladerampe nach Anspruch 7, wobei der Steg (P) laterale flexible Antireibungsschutzelemente (15b) hat, die den Verschluss zwischen dem Steg (P) und den Innenseiten des Schutzdaches (3) und dem Erweiterungsbereich herstellen, wenn der Steg (P) in einer Betriebsposition angeordnet ist und auf dem Container des Lastwagens gestützt ist.

12. Isolierende Laderampe nach Anspruch 7, wobei der Steg (P) flexible isolierende Elemente hat, die sich unter seinem gelenkigen Bereich befinden, die den externen Verschluss und die Versiegelung des gelenkigen Bereichs herstellen, wobei sie sich über den gesamten Bereich, der zwischen den Innenflächen des Schutzdaches (3) und der befestigten Erweiterung (1) existiert, erstrecken.

## Revendications

1. Quai de chargement isolant, du type destiné à charger et à décharger des camions, ayant
• un abri isolant (3) pour la fermeture latérale et supérieure d'une zone de passage entre la benne de chargement d'un camion et une ouverture (H) pour avoir accès à un immeuble,
• une passerelle fixe (P) faisant saillie de l'ouverture (H) pour avoir accès à l'immeuble pour former ladite zone de passage ;
• un mécanisme de support-nivellement et de guidage vertical (2) pour supporter-niveler et guider verticalement l'abri (3) par rapport à ladite passerelle (P), ledit mécanisme (2) comportant
∘ des guides verticales (4) sur lesquels l'abri (3) est monté permettant le déplacement vertical de l'abri,
∘ des poulies (6) montées sur un arbre (7) situé sur la partie supérieure du mécanisme (2), et des câbles, bandes ou courroies (5) tournant sur lesdites poulies (6) et fixé par ses extrémités opposées à l'abri (3) et aux contrepoids (8) déplaçables verticalement par rapport aux guides verticaux (4), lesdits câbles, bandes ou courroies (5) transmettant le mouvement vertical de l'abri (3) aux contrepoids (8) ;
• ledit abri (3) est configuré sous la forme d'un « U » inversé ;
**caractérisé en ce que** le quai de chargement isolant comprend :
• une extension fixe (1) faisant saillie du quai de chargement de l'immeuble intégrant un support fixe (12), ledit support fixe (12) supportant le mécanisme (2) pour supporter-niveler et guider verticalement l'abri et l'abri (3) ; dans lequel
• le mécanisme (2) a en outre quelques ressorts (10a, 10b) et butées (11a, 11b) capables de réguler la pression desdits ressorts (10a, 10b) situés sur des côtés opposés dudit support fixe (12) ;
permettant le déplacement vertical de l'abri (3) par rapport à ladite passerelle fixe (P), et l'amortissement des déplacements verticaux transmis par le camion à l'abri (3), et permettant à l'abri (3) de revenir à sa position originale lorsque le camion quitte le quai de chargement.

2. Quai de chargement isolant, selon la revendication 1, dans lequel les guides verticaux (4) du mécanisme de support-nivellement et de guidage vertical (2) ont sur la partie avant quelques paliers ou éléments antifriction (9) pour le support de l'abri (3).

3. Quai de chargement isolant, selon la revendication 1, dans lequel l'abri (3) est formé par une mousse flexible ou matière plastique montée sur une plaque de support (13) en regard du mécanisme de support-nivellement et de guidage vertical (2).

4. Quai de chargement isolant, selon la revendication 3, dans lequel les câbles, bandes ou courroies (5) du mécanisme de support-nivellement et de guidage vertical (2) sont fixés à la plaque de support (13) dudit abri (3) par l'une de ses extrémités et au contrepoids (8) par l'extrémité opposée.

5. Quai de chargement isolant, selon les revendications précédentes 3 ou 4 ; dans lequel les guides verticaux (4) du mécanisme de support-nivellement et de guidage vertical (2) ont sur la partie avant quelques paliers ou éléments antifriction (9) pour le support de l'abri (3), et dans lequel la plaque de support (13) a des canaux verticaux (14) pour recevoir les paliers ou éléments antifriction (9) du mécanisme de support et de guidage vertical (2), ainsi que quelques saillies pour empêcher le relâchement dans le sens horizontal de l'abri (3) depuis la plaque de support (13).

6. Quai de chargement isolant, selon la revendication 5, dans lequel les saillies pour empêcher le relâchement dans le sens horizontal de l'abri (3) depuis la plaque de support (13) sont formées par des tronçons courts permettant le retrait de l'abri (3) sans avoir besoin de déplacer ce dernier verticalement dans son intégralité.

7. Quai de chargement isolant selon l'une quelconque des revendications précédentes dans lequel la passerelle (P) occupe la totalité de l'espace entre les côtés de l'abri (3), ayant à ses extrémités latérales des bords antifriction flexibles constituant la fermeture entre la passerelle (P) et l'abri (3) fournissant un fermeture étroite additionnelle de la zone de passage réduisant les pertes d'énergie et empêchant l'entrée d'insectes, de rongeurs ou de poussière.

8. Quai de chargement isolant, selon la revendication 7, dans lequel la passerelle (P) a des éléments de protection antifriction flexibles avant (15a) établissant la fermeture entre la passerelle (P) et la benne de chargement du camion, lorsque ladite passerelle (P) est disposée dans une position fonctionnelle supportée sur la benne de chargement du camion.

9. Quai de chargement isolant, selon l'une quelconque des revendications 7 et 8, dans lequel la passerelle (P) est formée par un corps central et des extensions latérales recouvrant toute l'espace existant entre les faces internes de l'abri (3).

10. Quai de chargement isolant, selon l'une quelconque des revendications 7, 8 et 9, dans lequel la passerelle (P) a sur sa face inférieure, en regard de la zone de passage, une doublure de matériau isolant.

11. Quai de chargement isolant, selon la revendication 7, dans lequel la passerelle (P) a des éléments de protection antifriction flexibles latéraux (15b) établissant la fermeture entre la passerelle (P) et les faces internes de l'abri (3), et la portion d'extension, lorsque ladite passerelle (P) est disposée dans une position fonctionnelle supportée sur la benne de chargement du camion.

12. Quai de chargement isolant, selon la revendication 7, dans lequel la passerelle (P) a des éléments d'isolation flexibles situés sous sa zone articulée établissant la fermeture et l'étanchéité externes de ladite zone articulée s'étendant sur toute la zone existante entre les surfaces internes de l'abri (3) et l'extension fixe (1).
